# EUROPEAN PATENT APPLICATION

(11) **EP 4 815 406 A1**
(43) Date of publication of application: **30.09.2026**
(21) Application number: 25166105.4
(22) Date of filing: 25.03.2025
(51) Int. Cl.: H04L 67/02, H04W 76/10

(54) **METHOD FOR USING A USER EQUIPMENT WITH A MOBILE COMMUNICATION NETWORK AND/OR FOR TRANSMITTING NEXT GENERATION APPLICATION LAYER PROTOCOL MESSAGES, NGAP MESSAGES, AND/OR NON-ACCESS STRATUM MESSAGES, NAS MESSAGES, SYSTEM OR MOBILE COMMUNICATION NETWORK, USER EQUIPMENT, PROGRAM AND COMPUTER-READABLE MEDIUM**

(71) Applicant: Deutsche Telekom AG, 53113 Bonn (DE)
(72) Inventor: COLOM IKUNO, Josep, 2100 Korneuburg (AT)
(74) Representative: Schwöbel, Thilo K.

(57) **Abstract**

The invention relates to a method for using a user equipment with a mobile communication network and/or for transmitting next generation application layer protocol messages, NGAP messages,
wherein the mobile communication network comprises at least one access network node or entity of an access network and at least one core network node or entity of a core network,
wherein the access network node or entity and the core network node or entity exchange NGAP messages in uplink and downlink direction over a transport protocol being a request-response protocol, wherein such NGAP messages comprise class 2 NGAP messages that lack a defined reply message,
wherein, in order to provide communication services to the user equipment and/or for using the user equipment with the mobile communication network, the method comprises
- regarding a considered pair of class 2 NGAP messages comprising one uplink and one downlink NGAP message - the step of transporting the considered pair of class 2 NGAP messages by means of:
-- a request message, and
-- a response message

of the transport protocol..

## Description

### BACKGROUND

The present invention relates a method for using a user equipment with a mobile communication network and/or for transmitting next generation application layer protocol messages, NGAP messages, and/or non-access stratum messages, NAS messages in uplink and downlink direction over an underlying protocol being a request-response protocol.

Additionally, the present invention relates to a system or mobile communication network for using a user equipment with the mobile communication network and/or for transmitting next generation application layer protocol messages, NGAP messages, and/or non-access stratum messages, NAS messages, in uplink and downlink direction over an underlying protocol being a request-response protocol.

Furthermore, the present invention relates to a user equipment for being used with an inventive mobile communication network and/or for transmitting and/or receiving at least one non-access stratum message, NAS message, that comprises a reference identifier information, especially as a non-access stratum reply code.

Furthermore, the present invention relates to a program and to a computer-readable medium for using a user equipment with a mobile communication network and/or for transmitting next generation application layer protocol messages, NGAP messages, and/or non-access stratum messages, NAS messages, in uplink and downlink direction over an underlying protocol being a request-response protocol according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G and/or further mobile communication generations of radio access technologies (referring to the different generations of radio access technologies) and typically comprise (or consist of) cells (or radio cells) of one or a plurality of the respective radio access technology/radio access technologies, such radio cells typically being served by base station entities such as gNodeBs or eNodeBs. Typically, such a mobile communication network comprises an access network (comprising the base station entities) as well as a core network that typically comprises network nodes that realize a plurality of network functions or services.

In cellular mobile networks according to different generations of radio access technologies (e.g. in all of GSM (2G), UMTS (3G), LTE (4G), 5G and 6G), an air interface typically exists between a user equipment and its serving base station entity, and this air interface typically comprises at least a control plane and a user plane. Data or traffic - especially control data or traffic - that needs to be exchanged between the user equipment and the (or its) serving base station entity is also called access stratum (AS) traffic, i.e. relating to traffic that is typically terminated at the user equipment and at the base station entity. In addition to access stratum (AS) communication, non-access stratum (NAS) communication is called data or traffic - especially control data or traffic - that is exchanged between the user equipment and the core network (i.e. typically specific network functions or services of the core network), i.e. relating to traffic that is typically terminated at the user equipment on the one hand, and at the core network (or network function or service thereof) on the other hand.
Of course - due to the air interface -, also non-access stratum communication needs to be transported, or (transparently) forwarded, by the base station entity (to the user equipment, i.e. in downlink direction, if originating from the core network, or, alternatively, to the core network, i.e. in uplink direction, if originating from the user equipment). However, such non-access stratum communication is typically encrypted between the user equipment and the (respective network function(s) or service(s) of the) core network such that its content is - at least in general - not visible to the base station entity.

In conventionally known mobile communication networks, non-access stratum messages are transported - at least on the N2 interface or reference point, i.e. between the radio access network (or base station entity) and the core network - on (or above) the next generation application layer protocol (NGAP, sometimes referred to as NG-AP), and the next generation application layer protocol is transported on (or above) the stream control transmission protocol (SCTP) which is, itself, no request/response protocol.

Evolution of interfaces such as the N2 interface to more capable and widely used protocol stacks such as HTTP-based stacks provide advantages, such as higher flexibility, extensibility, security, routing, scalability and especially improved cloud-nativeness. One important aspect of HTTP is that it is a request/response protocol. That is, every request requires a response. That is, the receiver notifies the sender whether the request was successfully received and/or processed. However, the introduction of a request/response protocol in the protocol stack below the next generation application layer protocol (NGAP)-Layer (and, thus, also below the non-access stratum (NAS)-Layer), could prohibitively increase the number of messages to be exchanged (up to doubling the number of messages to be exchanged).

### SUMMARY

An object of the present invention is to provide a technically simple, effective, cost-effective, solution for using for using a user equipment with a mobile communication network and/or for transmitting next generation application layer protocol messages, NGAP messages in uplink and downlink direction over a transport protocol being a request-response protocol. A further object of the present invention is to provide a corresponding system or mobile communication network, a corresponding user equipment and a corresponding program and computer-readable medium.

The object of the present invention is achieved by a method for using a user equipment with a mobile communication network and/or for transmitting next generation application layer protocol messages, NGAP messages, and/or non-access stratum messages, NAS messages, wherein the mobile communication network comprises at least one access network node or entity of an access network and at least one core network node or entity of a core network,
wherein the access network node or entity and the core network node or entity exchange NGAP messages in uplink and downlink direction over an underlying protocol being a request-response protocol, and/or wherein the user equipment and the core network node or entity exchange - especially involving the access network node or entity - NAS messages in uplink and downlink direction over an underlying protocol being a request-response protocol,
wherein, in order to provide communication services to the user equipment and/or for using the user equipment with the mobile communication network, the method comprises - regarding a considered pair of messages comprising one uplink and one downlink message, the considered pair of messages being a pair of NGAP messages or a pair of NAS messages - the step of transporting the considered pair of messages by means of:
   -- a request message, and
   -- a response message
of the underlying protocol.

It is thereby advantageously possible according to the present invention to be able to use a request-response protocol as the underlying (transport) protocol for transmitting or transporting a pair of messages being (either) a pair of NGAP messages or, alternatively, a pair of NAS messages, especially between the access network node or entity and the core network node or entity.

By means of using a request-response protocol (especially the HTTP protocol) as the underlying (transport) protocol for transmitting or transporting a pair of messages being (either) a pair of NGAP messages or, alternatively, a pair of NAS messages, it is advantageously possible to relate a request message (of the request-response protocol) and (corresponding) response message (of the request-response protocol) to one another. This in turn provides the possibility, according to the present invention, to use the request-response protocol, e.g., for efficient, 3GPP-agnostic, load balancing using plain QUIC (Quick UDP (user datagram protocol) internet connections).

Furthermore, it is advantageously possible, according to the present invention, that the use of the request-response protocol does not necessarily (or: not always) require to considerably increase the number of messages exchanged on the layer of the request-response protocol (i.e. underlying the layer of the NGAP messages). This is realized, according to the present invention, by means of a mapping for the transport of encrypted NAS messages and/or for the transport of NGAP messages over the request-response protocol (such as, e.g., HTTP) such that an optimum usage of the response messages can be ensured despite the radio access network (i.e. the access network node or entity) not being able to see within the encrypted (and transparently forwarded) NAS messages.
According to the present invention, it is especially advantageous, in order to be able to use a request-response protocol (such as, e.g., HTTP) for the transport of NGAP messages, to define a mapping between the currently used one-way message protocol (such as SCTP) and a request-response protocol (such as HTTP). Thus, the present invention proposes enhancements to the service-based architecture (SBA) protocol stack to better support the transport of NAS messages.
In other words, it is advantageously possible, according to the present invention to implement an SBI-based N2 interface in an efficient way, as well as without introducing any changes to the NAS protocol.

NAS messages (i.e. non-access stratum messages) are control plane messages, i.e. providing control plane (CP) signaling between the user equipment and the core network (being primarily merely forwarded by the access network node or entity, i.e. the serving base station entity) and are based on the NAS (non-access stratum) protocol. While the NAS protocol is typically defined as "terminated at the AMF", there are some nuances to this statement:

5G-NAS (TS 24.501) is an evolution of 4G-NAS and also defines the information element coding in the specification. The path chosen for 5G was to terminate NAS security at a common point and disaggregate the mobility management entity (MME) functionality.
The access and mobility management function (AMF) terminates NAS security for all NAS messages of a user equipment and processes mobility management (MM); however, for other functions, the access and mobility management function (AMF) forwards NAS payloads over service-based interface (SBI) to other network functions or services (NFs), such as: SMF for Session Management (SM), SMSF for SMS, PCF for policy, and GMLC for location (services).
5G-NAS is transported between the UE and the CN on top of NGAP (i.e. NGAP payloads can contain NAS containers).
SBI refers to service-based interface and it uses the service based architecture (SBA) 5GC control plane (CP) architecture. SBIs use a newly-defined protocol stack. Instead of GTP-C, which was commonly used in previous generations for signaling traffic, it is based on HTTP/2.
NAS messages are, with some exceptions, encrypted end-to-end between the user equipment and the core network due to NAS security. That is, the radio access network (i.e. the access network node or entity) has no access to the contents of the NAS containers exchanged between the user equipment and the core network; NAS security is, e.g., based on a 128-bit encryption key. While messages prior to the establishment of a NAS security context are exchanged in plain text (i.e. unencrypted), after the establishment of the NAS security context, NAS messages are exchanged encrypted. Furthermore, NAS messages represent the N1 interface or reference point, which is between the user equipment and the core network. Although in principle "transparent" to the radio access network, it is obviously necessary that the radio access network is able to see certain information in order for radio access network to be able to route the (uplink) NAS messages coming from the user equipment towards the core network and vice versa.
NAS messages are sent within NGAP (or NGAP) messages. Such NGAP messages are routed based on an NGAP ID (identifier information) between the access and mobility management function and the user equipment (AMF-UE NGAP ID), as well as an NGAP ID (identifier information) between the radio access network and the user equipment (RAN-UE NGAP ID). These identifiers are part of the NGAP protocol, i.e. part of NGAP messages. Furthermore, the RRC channel(s) used between a gNB and a UE are associated to a given UE and a single AMF serves a given UE.
Further towards the UE, the NAS payloads are transported over the radio resource control (RRC) protocol layer, which is in turn mapped to logical, and ultimately, physical channels over the air interface (NAS payloads are transported over RRC by means of signalling radio bearers (SRBs); NAS payloads are sent by means of a RRC-Container and associated to a SRB ID; a "DedicatedNAS-Message" Information Element (IE) is used over RRC to transparently transport the NAS payload). Thus, and as mentioned before, the NAS payload is not completely a "black box" to the base station entity or access network node or entity, rather, a couple of parameters are visible to the radio access network, among them the (Extended) Protocol Discriminator (EPD).
In this regard, as far as the radio access network is concerned, all encrypted (cyphered) NAS containers are marked as MM (even if the actual encrypted NAS message would be, e.g., SM). Furthermore, there is a message authentication code and a sequence number as part of a NAS message.

Regarding NGAP messages, on the NGAP layer NGAP elementary procedures are specified. Each NGAP message indicates to what elementary procedure it is associated; equally, each procedure has a specified ASN.1 definition of the expected (e.g. mandatory, optional) parameters and their format. An elementary procedure is a unit of interaction between the NG-RAN node (i.e. the access network node or entity) and the access and mobility management function (AMF). These elementary procedures are defined separately and are intended to be used to build up complete sequences in a flexible manner. If the independence between some elementary procedures is restricted, it is described under the relevant elementary procedure description. Unless otherwise stated by the restrictions, the elementary procedures may be invoked independently of each other as standalone procedures, which can be active in parallel. The usage of several NGAP elementary procedures together or together with elementary procedures from other interfaces is specified in stage 2 specifications (e.g., TS 38.401, TS 38.410 and TS 38.300). An elementary procedure consists of an initiating message and possibly a response message, wherein two kinds of elementary procedures are used: class 1 elementary procedures (being elementary procedures with response (success and/or failure)), and class 2 elementary procedures (being elementary procedures without response).
For class 1 elementary procedures, the types of responses can be as follows: "successful" (meaning that a signaling message explicitly indicates that the elementary procedure successfully completed with the receipt of the response), "unsuccessful" (meaning that a signaling message explicitly indicates that the elementary procedure failed), "on time supervision expiry" (i.e., absence of expected response), and "successful and unsuccessful" (meaning that one signaling message reports both successful and unsuccessful outcome for the different included requests. The response message used is the one defined for successful outcome).
Class 2 elementary procedures are considered always successful (cf. TS 38.413 regarding both classes of procedures).

As opposed to other signaling and/or transport protocols such as SCTP, request-response protocols (such as, e.g., HTTP) is a protocol build on a request-response model, i.e., every request sent to an HTTP endpoint (necessarily) requires an answer, even if the answer is a simple "200 OK" HTTP response message; however, a message response may include a message body.
Regarding the path to 6G, the present invention proposes to use HTTP (e.g. HTTP/2 or HTTP/3) for transporting NGAP payloads, i.e. NGAP messages. As a consequence thereof, also NAS messages would be (indirectly) transported via, or using, the request-response protocol, e.g. HTTP.
However, in order to implement a low-impact solution for transporting NGAP payloads over a request-response protocol such as HTTP, it is proposed, according to the present invention, to design an efficient mapping between NGAP messages or procedures to request-response messages, e.g. HTTP messages.
In order to enable use of, e.g., HTTP for N2 signaling in 6G, a detailed solution is required that can be shown to be as efficient as possible, as this includes the number of messages needed to realize existing procedures.
The present invention solves this problem by means of providing an efficient and flexible mapping of NGAP procedures to a request-response protocol such as HTTP (such as HTTP/1, HTTP/2 or HTTP/3).
While the mapping of Class 1 NGAP messages to HTTP messages is deemed quite trivial (as NGAP request messages can be easily mapped to a HTTP request and the corresponding NGAP response messages to the HTTP response message, cf. the NGAP defined in TS 38.413), class 2 procedures do not have a clear mapping as they by definition, do not have a reply. This is why the only trivial possible mapping for class 2 procedures would be that an empty HTTP response has to be sent (i.e. for each class 2 NGAP message, there are two HTTP messages) which would entail that such a change to a request-response protocol such as HTTP required potentially twice the number of messages, i.e. it would considerably increase the number of messages.
Thus, while using HTTP has its advantages (e.g. security, use of APIs, broad product support, etc.), it could very well be the case that, when considering such an increase in the number of messages (such as twice the number of class 2 messages), this drawback outweighs its benefits.

Thus, according to the present invention, a specific mapping is proposed such that - regarding a considered pair of messages comprising one uplink and one downlink message, the considered pair of messages being (either) a pair of NGAP messages, or alternatively, a pair of NAS messages - this pair of messages is transported by means of (just) a request message as well as a response message of the underlying (transport) protocol. Hence (especially in case that the pair of messages does correspond to two class 2 messages), it is advantageously possible to avoid - compared to the above mentioned trivial mapping for NGAP class 2 procedures - such an important increase in the number of request-response messages of the protocol underlying the NGAP layer. According to the present invention, this is possible to be realized by means of (regarding the considered pair of class 2 NGAP messages or regarding the considered pair of NAS messages) an inclusion of a reply-related information in the header part of the request message (i.e. e.g. a reply-related information in the HTTP header of the HTTP request message).
The present invention proposes that the return message (i.e. the response message of the underlying (transport) protocol) - e.g. in view of transporting payload of a NGAP class 2 procedure - is used for transporting higher-layer (e.g. NAS) messages, such that the response message is not "empty". For this, the sender (entity, i.e. either the access network node or entity if the (chronologically) first message of the considered pair of messages is in uplink direction or, alternatively, the core network node or entity if the (chronologically) first message of the considered pair of messages is in downlink direction) especially introduces additional information (content) to the request message (e.g. a HTTP request message), such that the receiver (entity, i.e. the core network node or entity or, alternatively, the access network node or entity) is able to know that
-- it should wait with the response (i.e. to be part of the response message, e.g. HTTP response message) and/or
-- what payload should be included in the response message, e.g. HTTP response message.
Thus, it is advantageously possible, according to the present invention to use, as the underlying transport protocol (for transporting NGAP messages and/or NAS messages and as part of the protocol stack of the N2 interface or reference point), a request-response protocol (such as HTTP or a variant thereof), and nevertheless avoid to increase the number of messages of the (underlying) transport protocol twofold compared to the number of NGAP class 2 messages to be transmitted (or to be transported); more precisely, it is advantageously possible according to the present invention - and regarding at least a part (or: at least regarding certain considered pairs) of the NGAP class 2 messages (of network procedures such as: user equipment registration, user equipment-initiated service request (idle), user equipment-initiated service request (connected), network initiated service request (idle), etc.) to be transmitted/transported - that the number of messages of the (underlying) transport protocol is not increased at all (compared to the number of NGAP class 2 messages to be transmitted/transported). The proposed mapping in order to use a request-response protocol as the underlying transport protocol for the NGAP transport can be summarized as follows:
-- each N2 message must have a reply (even if empty);
-- wherever possible, regarding a request message and a corresponding response message (of the underlying request-response, especially HTTP), the response message comprises a message payload of the considered pair of NGAP (class 2) messages;
-- it is accepted, according to the present invention, that not strictly all NGAP (class 2) messages are able to be mapped in such a manner (i.e. such that a considered pair of NGAP (class 2) messages is mapped to a request and a response message of the underlying request-response protocol - especially HTTP), i.e. some 'empty responses' are unavoidable.

According to the present invention, it is advantageously possible and preferred that the considered pair of messages - especially a pair of NGAP messages of the class 2 NGAP message type that lacks a defined reply message - comprises, according to their chronological order or occurrence, a first message and a second message, wherein
-- the first message of the considered pair of messages is transported by, or corresponding to, at least partly, the request message of the underlying protocol, and
-- the second message of the considered pair of messages is transported by, or corresponding to, at least partly, the response message of the underlying protocol, which response message corresponds to the request message, wherein especially the second message of the considered pair of messages corresponds to the payload, or part thereof, of the response message.

According to the present invention, it is thereby advantageously possible to realize a mapping between the respective request message and its corresponding response message such that the increase in the number of messages - especially on the N2 interface between the access network node or entity and the core network node or entity - due to using a request-response protocol as underlying protocol (i.e. for the transport of messages) is able to be limited as much as possible.

According to further embodiments of the present invention, it is possible and preferred that - regarding the pair of messages, especially a pair of NGAP messages of the class 2 NGAP message type that lacks a defined reply message, comprising the uplink and the downlink message and regarding the corresponding request and response messages of the underlying protocol - the request message comprises, or is associated to, in a manner accessible to the access network node or entity, a reference identifier information referencing, or indicating, the second message of the considered pair of messages,
wherein especially the first message of the considered pair of messages is a downlink message.

It is thereby advantageously possible, by providing a reliable reference, to advantageously realize an advantageous mapping between the request messages and their respective response messages.

In a further embodiment of the present invention, it is possible and preferred that the reference identifier information corresponds to, or at least comprises, the non-access stratum, NAS, sequence number and/or a non-access stratum, NAS, reply code.

Still furthermore, it is also possible and preferred, according to the present invention that at least downlink NGAP messages and/or downlink NAS messages, but especially both uplink and downlink NGAP messages and/or both uplink and downlink NAS messages, are encrypted in a manner such that access to their content or at least part thereof is denied to the network node or entity,
wherein especially, in case that NAS messages comprise, or are associated to, the reference identifier information, the reference identifier information is part of the encrypted part of the NAS message as well as part of the part of the NAS message that is accessible to the access network node or entity.

It is thereby advantageously possible to protect the content of NAS communication (especially from the access network node or entity), and, by transmitting the reference identifier information both in encrypted and in (from the perspective of the access network node or entity) unencrypted form, it is possible to also protect the communication from manipulations that might be contemplated in case that the reference identifier information is merely transmitted unencrypted.

Likewise, it is possible and preferred, according to the present invention that the underlying request-response protocol is, or corresponds to, the hypertext transfer protocol, HTTP protocol, especially according to the HTTP/2 standard, especially as defined in RFC 7540 and/or RFC 7541, and/or according to the HTTP/3 standard, especially as defined in RFC 9114.

Still furthermore, it is also possible and preferred, according to the present invention that - regarding the pair of messages and regarding the corresponding request and response messages of the underlying protocol - the response message of the underlying protocol corresponds to a HTTP "2XX" message, comprising the second message of the considered pair of messages as part of its HTTP body.

Additionally, it is also possible and preferred, according to the present invention that - regarding the pair of messages and regarding the corresponding request and response messages of the underlying protocol - the request message and/or the response message of the underlying protocol comprises, or is associated to, a time-related information, especially as part of its header portion,
wherein especially the time-related information comprises or indicates a timestamp and/or an expiration time.

Thereby, it is advantageously possible, according to the present invention to provide for an expiration of the mapping between a request message and a response message to avoid a perpetual mapping.

Furthermore, the present invention relates to a system or to a mobile communication network for using a user equipment with the mobile communication network and/or for transmitting next generation application layer protocol messages, NGAP messages, and/or non-access stratum messages, NAS messages, wherein the system or mobile communication network comprises at least one access network node or entity of an access network and at least one core network node or entity of a core network,
wherein the access network node or entity and the core network node or entity exchange NGAP messages in uplink and downlink direction over a underlying protocol being a request-response protocol, and/or wherein the user equipment and the core network node or entity exchange - especially involving the access network node or entity - NAS messages in uplink and downlink direction over an underlying protocol being a request-response protocol,
wherein, in order to provide communication services to the user equipment and/or for using the user equipment with the mobile communication network, the system or the mobile communication network is configured such that - regarding a considered pair of messages comprising one uplink and one downlink message, the considered pair of messages being a pair of NGAP messages or a pair of NAS messages - transporting the considered pair of messages is realized by means of:
   -- a request message, and
   -- a response message
of the underlying protocol,
especially such that the considered pair of messages - especially a pair of NGAP messages of the class 2 NGAP message type that lacks a defined reply message - comprises, according to their chronological order or occurrence, a first message and a second message, wherein
   -- the first message of the considered pair of messages is transported by, or corresponding to, at least partly, the request message of the underlying protocol, and
   -- the second message of the considered pair of messages is transported by, or corresponding to, at least partly, the response message of the underlying protocol message that corresponds to the request message, wherein especially the second message of the considered pair of messages corresponds to the payload, or part thereof, of the response message.

Still furthermore, the present invention relates to a user equipment for being used with a mobile communication network, especially according to the present invention, and/or for transmitting and/or receiving at least one non-access stratum message, NAS message, that comprises a reference identifier information, especially as a non-access stratum reply code, and wherein the user equipment is especially configured such as to
-- transmit the at least one NAS message to a core network node or entity of the mobile communication network and/or
-- receive the at least one NAS message from a core network node or entity of the mobile communication network,
wherein especially the user equipment is configured - in view of NGAP messages being transmitted, in uplink and downlink direction and between an access network node or entity and the core network node or entity over an underlying protocol being a request-response protocol - such that, regarding a considered pair of NAS messages comprising one uplink and one downlink message and being transported by means of a request message, and a response message of the underlying protocol, the user equipment receives and/or transmits the reference identifier information, wherein especially the reference identifier information references, or indicates, at least one of the messages of the considered pair of NAS messages.

Especially with respect to the user equipment, it is also possible and preferred, according to the present invention, that the user equipment and the core network node or entity exchange - especially involving the access network node or entity - NAS messages in uplink and downlink direction over the underlying protocol,
wherein, in order to provide communication services to the user equipment and/or for using the user equipment with the mobile communication network, the user equipment is configured such that - regarding a considered pair of NAS messages comprising one uplink and one downlink NAS message - transporting the considered pair of NAS messages is realized by means of:
-- a request message, and
-- a response message
of the underlying protocol.

Additionally, the present invention relates to a program comprising a computer readable program code, which, when executed on a computer and/or on a core network node or entity and/or on an access network node or entity, especially a base station entity, or in part on a core network node or entity and/or in part on an access network node or entity, especially a base station entity, causes the computer and/or the core network node or entity and/or the access network node or entity, especially the base station entity, to perform the inventive method.

Still additionally, the present invention relates to a Computer-readable medium comprising instructions which when executed on a computer and/or on a core network node or entity and/or on an access network node or entity, especially a base station entity, or in part on a core network node or entity and/or in part on an access network node or entity, especially a base station entity, causes the computer and/or the core network node or entity and/or the access network node or entity, especially the base station entity, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

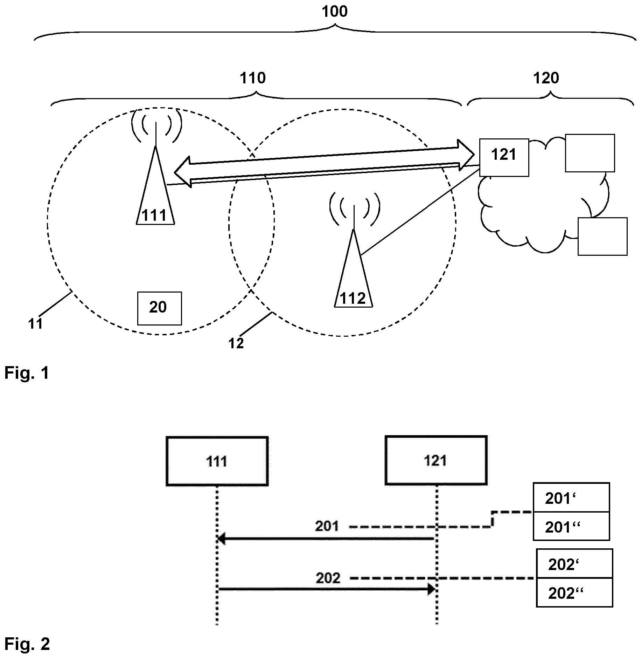

Figure 1 schematically illustrates the situation of a user equipment in a mobile communication network comprising a core network as well as a radio access network that has (at least) two base station entities (or access network nodes or entities), one of which is serving the user equipment, thus involving data being transmitted, both in uplink direction and in downlink direction, between the user equipment and the (serving) base station entity (or access network node or entity), as well as between the (serving) base station entity (or access network node or entity) and the core network, involving next generation application layer protocol messages, NGAP messages, and/or non-access stratum messages, NAS messages.
Figure 2 schematically and exemplarily illustrates primarily the communication between the access network node or entity (or base station entity) and the core network (or a network function or service thereof) regarding messages of a protocol underlying the layer of the NGAP messages and/or the layer of the NAS messages, this underlying protocol being a request-response protocol.

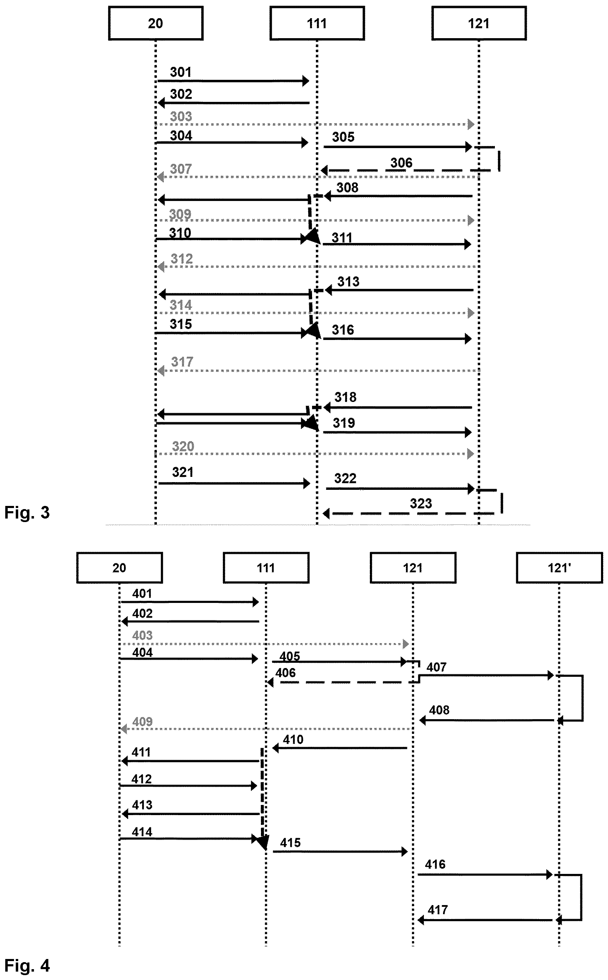

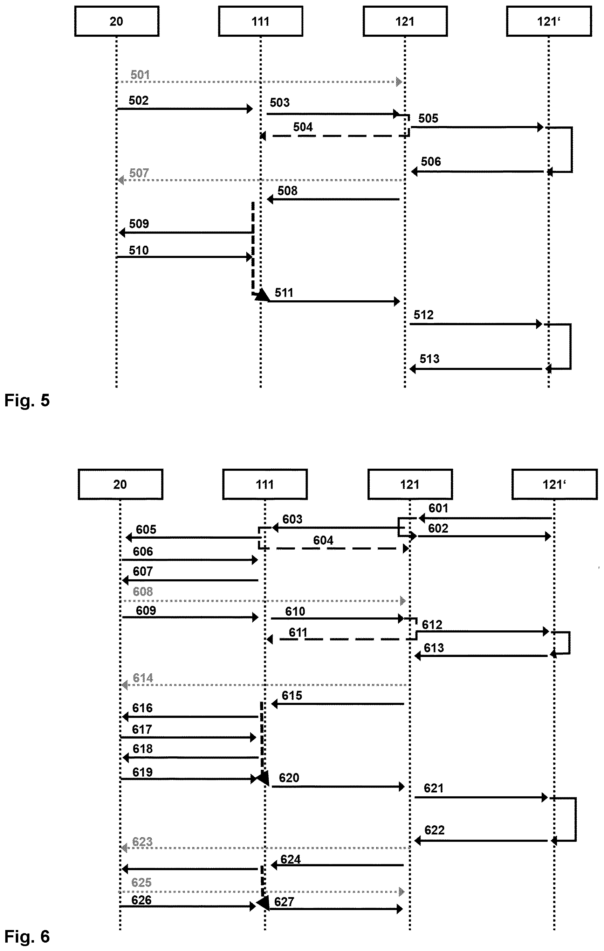

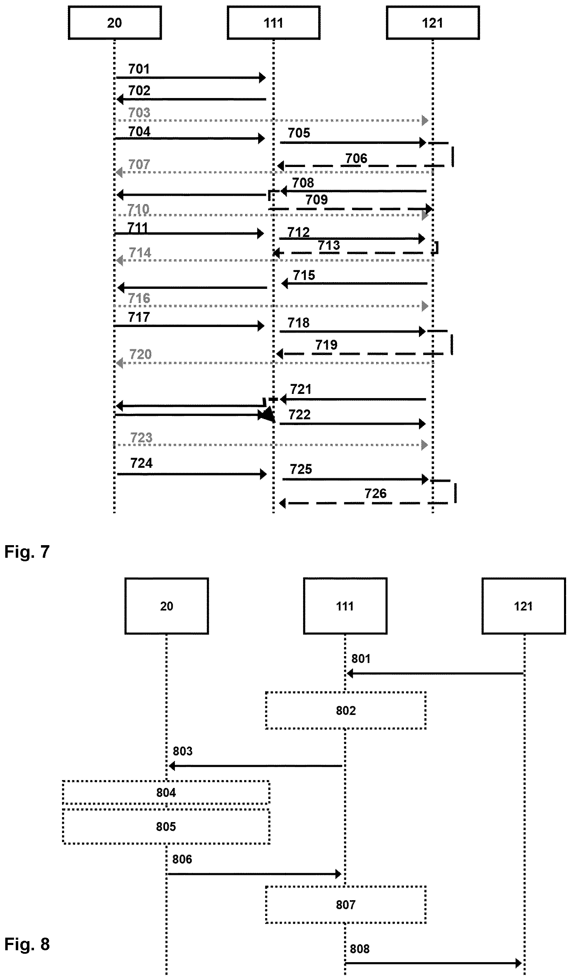

Figures 3 to 7 schematically and exemplarily illustrate the communication between the access network node or entity (or base station entity) and the core network (or a network function or service thereof) for specific situations, namely a user equipment registration (Figure 3), a user equipment-initiated service request, idle (Figure 4), a user equipment-initiated service request, connected (Figure 5), a network-initiated service request, idle (Figure 6), and a user equipment registration with backwards compatibility (Figure 7).
Figure 8 schematically and exemplarily illustrates a communication diagram (or message flow) showing how the NAS reply code reaches the user equipment.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign - only one network function or service is indicated by means of reference sign 121 which is, hereinafter, also called core network node or entity 121. The access network 110 or radio access network 110 typically comprises a plurality of radio cells 11, 12, i.e. geographical areas served, respectively, by base station entities. In the exemplary situation or scenario shown in Figure 1, a first base station entity 111 generates or is associated with or spans the first (terrestrial) radio cell 11, and a second base station entity 112 generates or is associated with or spans the second (terrestrial) radio cell 12 (the first and second (terrestrial) radio cells 11, 12 being represented, in Figure 1, by means of dashed circles around the first and second base station entity 111, 112, respectively). The first and second base station entity 111, 112 typically realize gNB functionality or next-generation gNB functionality. In the context of the present invention, such base station entities 111, 112 are also called, synonymously to the term base station entities, access network node(s) or entity/entities. The mobile communication network 100 is typically connected to a user equipment 20 (or, rather, the user equipment 20 is connected to the telecommunications network 100). In the exemplary situation represented in Figure 1, the user equipment 20 is schematically shown as being served by the first base station entity 111 - typically involving uplink data, being transmitted in uplink direction, and downlink data, being transmitted in downlink direction. Such uplink and downlink data, obviously, also need to be transmitted between the serving base station entity/access network node or entity 111 and the core network (especially exemplarily shown network function or service (or core network node or entity) 121 thereof); in Figure 1, this is schematically represented by means of a double arrow between the network function or service (core network node or entity) 121 and the base station entity/access network node or entity 111.

According to the present invention, the user equipment 20 is part of, or connected to, the mobile communication network 100, and, thus, transmits or exchanges data (or traffic) with the mobile communication network 100. This, of course, includes data or traffic exchanged on the air interface between the user equipment 20 and the base station entity/access network node or entity 111 (this is typically called the Uu interface or reference point), but it also includes data or traffic - especially control plane data or traffic - exchanged (i.e. transmitted in uplink as well as in downlink direction) between the base station entity/access network node or entity 111 (that is serving the user equipment 20) and the core network 120 (especially one specific network function or service 121 of the plurality of different network functions or services that the core network 120 typically has or comprises); this is typically called the N2 interface or reference point (regarding communication between the radio access network and the core network) and also relates to the N1 interface or reference point (regarding communication between the base station entity/access network node or entity 111 and the core network/network function or service 121 thereof - especially involving non-access stratum messages, NAS messages).

In conventionally known mobile communication networks 100 as well as according to the present invention, a different protocol stack is typically realized, or used, for realizing the Uu interface or reference point on the one hand, and the N2/N1 interface or reference point on the other hand. Typically the N2/N1 reference stack involves a non-access stratum layer for transporting NAS messages as well as a next generation application layer protocol (NGAP) layer for transporting NGAP messages. Thus, according to the present invention, next generation application layer protocol messages, NGAP messages, and/or non-access stratum messages, NAS messages, are transmitted - at least between the base station entity/access network node or entity 111 and the core network node or entity 121 - using an underlying protocol below the next generation application layer protocol (NGAP)-Layer (but wherein, typically, the NAS messages are not terminated at the access network node or entity 111, but, rather, only forwarded). Thus, the NGAP messages and/or the NAS messages are exchanged in uplink and downlink direction (and between the access network node or entity 111 and the core network node or entity 121) over the underlying protocol below the next generation application layer protocol (NGAP)-Layer.

In conventionally known mobile communication networks, this underlying protocol is typically the stream control transmission protocol (SCTP) which is, itself, not a request/response protocol.

According to the present invention, the mobile communication network (i.e. the access network node or entity 111 and the core network node or entity 121) is configured such that this underlying protocol is a request-response protocol, i.e. a request-response protocol is able to be used as the underlying protocol, especially without prohibitively increasing the number of messages to be exchanged (due to the fact that a request-response protocol is used instead of the SCTP).

Thus, in order to provide communication services to the user equipment 20 and/or for using the user equipment 20 with the mobile communication network 100, the method according to the present invention comprises - regarding a considered pair of messages comprising one uplink and one downlink message, the considered pair of messages being either a pair of NGAP messages or a pair of NAS messages - the step of transporting the considered pair of messages by means of both a request message, and a response message of the underlying protocol.

Figure 2 schematically and exemplarily illustrates such a request and response message primarily the communication between the access network node or entity (or base station entity) 111 and the core network node or entity (or a network function or service) 121 regarding messages of the protocol (being a request-response protocol) underlying the layer of the NGAP messages and/or the layer of the NAS messages.
In Figure 2, in a first processing step, the core network node or entity 121 transmits a request message 201 to the access network node or entity 111 (and the access network node or entity 111 receives the request message 201 from the core network node or entity 121), and, in a second processing step, the access network node or entity 111 transmits a response message 202 to the core network node or entity 121 (and the core network node or entity 121 receives the response message 202 from the access network node or entity 111); hence, in this exemplary embodiment, the request message 201 is transmitted in downlink direction, and the response message 202 is transmitted in uplink direction. However, the direction of the request message 201 (and, hence, also of the response message 202) could also be inverted, i.e. in uplink direction for a request message (not represented in Figure 2 but that would be transmitted by the access network node or entity 111 towards the core network node or entity 121) and in downlink direction for a response message (not represented in Figure 2 but that would be transmitted by the core network node or entity 121 towards the access network node or entity 111).
Typically, and according to the present invention, both the request message 201 and the response message 202 comprises a header part and a body part. The header part of the request message 201 shown in Figure 2 is schematically indicated by reference sign 201', and the body part thereof is schematically indicated by reference sign 201", whereas the header part of the response message 202 shown in Figure 2 is schematically indicated by reference sign 202', and the body part thereof is schematically indicated by reference sign 202". In case the underlying request-response protocol is a HTTP (such as the HTTP/2 or the HTTP/3 protocol), the respective header parts 201', 202' are HTTP headers and the respective body parts 201", 202" are HTTP bodies.
Especially, by means of using a request-response protocol (especially the HTTP protocol), it is advantageously possible to relate a request message and (corresponding) response message to one another; thus, it is able to be used for efficient, 3GPP-agnostic, load balancing using plain QUIC (Quick UDP (user datagram protocol) internet connections). In a transport protocol used in conventionally known mobile communication networks, such a relation between the request message 201 and (its) response message 202 (or vice versa) is not provided or realized.
Especially in case that a version of the HTTP protocol is used as underlying request-response protocol, HPACK/QPACK header compression (cf. RFC 9204 for QPACK and RFC 7541 for HPACK) is able to be used according to the present invention.

As already mentioned, it is advantageously possible, according to the present invention to use, as the underlying transport protocol (for transporting NGAP messages and/or NAS messages and as part of the protocol stack of the N2 interface or reference point), a request-response protocol (such as HTTP or a variant thereof), and nevertheless avoid to increase the number of messages - regarding at least a part (or: at least regarding certain considered pairs) of the NGAP class 2 messages to be transmitted/transported - compared to the number of NGAP class 2 messages to be transmitted/transported.
Examples of the mapping proposed according to the present invention (in order to efficiently use the request-response protocol as the underlying transport protocol for the NGAP transport) are exemplarily and schematically shown in Figures 3 to 7: These Figures illustrate the communication between the access network node or entity (or base station entity) and the core network (or a network function or service thereof, especially the access and mobility management function, AMF) for specific situations, namely a user equipment registration (Figure 3), a user equipment-initiated service request, idle (Figure 4), a user equipment-initiated service request, connected (Figure 5), a network-initiated service request, idle (Figure 6), and a user equipment registration with backwards compatibility (Figure 7). However, these Figures are to be understood only as exemplary representations of the proposed mapping according to the present invention. Especially, these examples illustrate that
-- each N2 message (of the underlying request-response protocol) must have a reply message (even if empty); this being a direct consequence of the used underlying protocol being a request-response protocol;
-- the mapping of NGAP messages is performed such that functionality is not impaired while the number of messages is reduced compared to the twofold increase of the message count resulting from a simple mapping (at least regarding NGAP class 2 messages);
-- wherever possible, regarding a request message and a corresponding response message (of the underlying request-response, especially HTTP), the response message comprises a message payload of the considered pair of NGAP (class 2) messages;
-- it is accepted, according to the present invention, that not strictly all NGAP (class 2) messages are able to be mapped in such a manner (i.e. such that a considered pair of NGAP (class 2) messages is mapped to a request and a response message of the underlying request-response protocol - especially HTTP), i.e. some 'empty responses' are unavoidable;
-- the mapping is realized considering that an asymmetry in the available information exists (at least in most cases) between the nodes regarding the visibility of NAS messages: NAS messages are visible to the core network node or entity (i.e. typically the access and mobility management function, AMF, or the security anchor function, SEAF) but not (at least not in every case) to the access network node or entity (i.e. the base station entity or gNodeB).

The mentioned asymmetry regarding the visibility of NAS messages is especially difficult for the NGAP DL (downlink) NAS Transport (transparent transport of NAS messages from AMF to RAN, i.e. from the core network node or entity 121 to the access network node or entity 111) due to the fact that:
-- RAN (base station entity 111) cannot see the content of the NAS message;
-- Even if it would be able to see the message, RAN is not (or rather, should not) need to know the NAS procedure flows in order to know what the next (expected) message should be.
In order to address this problem, the approach proposed according to the present invention is to enrich the information sent over the NGAP layer - especially using the header part 201' of the request message 201 (e.g. HTTP headers) transporting NGAP signaling - with information regarding the NAS layers that the RAN node (access network node or entity 111) can evaluate (i.e. not the NAS payload, which it cannot even decrypt) especially according to the following considerations:
-- Request/response mapping based on NAS message:
   -- Is OK if done at the AMF because it has visibility of the encrypted NAS message
   -- Should be avoided at RAN: gNB cannot see what is inside encrypted NAS payloads Examples:
-- NGAP Initial UE Message empty response (NAS registration): Coupling of NAS registration req. to NAS registration accept not possible: gNB does not see what NAS message is transported;
-- NGAP Initial Context Setup Request / Response for UE registration: Already contains an "empty response".
According to the present invention:
-- regarding Class 1 procedures: a fixed mapping for messages is applied;
-- regarding Class 2 procedures RAN-to-CN, i.e. in uplink direction: If AMF response includes a NGAP/NAS payload, RAN will process the NGAP payload and, if present forward the NAS payload within
-- regarding Class 2 procedures AMF-to-RAN, i.e. in downlink direction: AMF instructs or informs - e.g. via an information in the header part 201' of the request message 201 - the gNB what NAS sequence number should be included in HTTP response (the NAS sequence number is piece of information visible to gNB also for encrypted payloads), e.g. for "generic" NGAP DL NAS Transport NGAP procedure.
Hence, according to the proposed mapping according to the present invention, the NAS knowledge is leveraged where possible to provide flexible request-response mapping, and the RAN does not need to check the content of a NAS container beyond the NAS sequence number.
Hence, according to a preferred embodiment according to the present invention, the proposed mapping comprises (or consists in) the inclusion of the NAS sequence number of the expected NAS response into the NGAP request towards RAN. Thus the NAS sequence number is used - in this preferred embodiment - as the reference identifier information that is referencing, or indicating, the second message of the considered pair of messages, and the request message comprises the NAS sequence number as the reference identifier information (referencing, or indicating, the second message of the considered pair of messages) in a manner accessible to the access network node or entity 111.
For the exemplary case of the HTTP protocol being used as the underlying request-response (transport) protocol, the HTTP request message 201 might be a "HTTP POST (NGAP DownlinkNASTransport)" message, and the HTTP response message 202 might be a "HTTP 200 OK (UplinkNASTransport)" message. The header part 201' ("HTTP header") of the request message 201 might comprise the following pieces of information: scheme: https; method: POST; path: <URI>; content-type: multipart/related; 3gpp-reply-nas-seq-nr: "5" (as an example),
and the body part 201" ("HTTP Body") of the request message 201 might comprise the following pieces of information:
NGAP binary payload (ADN.1-coded): DownlinkNASTransport (EPD: 5G mobility management messages; Security header: Integrity protected; Auth. Code: 0x21fd796c; sequence number: "4"); <NAS payload>;
whereas the header part 202' ("HTTP header") of the request message 202 might comprise the following pieces of information:
   status: 200 OK,
   and the body part 202" ("HTTP Body") of the request message 202 might comprise the following pieces of information:
      NGAP binary payload (ADN.1-coded): UplinkNASTransport (EPD: 5G mobility management messages; Security header: Ciphered; Auth. Code: 0xa0341022; sequence number: "5"); <NAS payload>.
      As the NAS sequence number information (as the reference identifier information, referencing, or indicating, the second message of the considered pair of messages) is visible to RAN, i.e. to the access network node or entity 111, the information "sequence number: '5'" the access network node or entity 111 is able to include the respective NAS payload in its response message 202, and, thus, avoid an increase in the number of messages.
      Hence, by means of allowing, according to the present invention, to indicated the expected NAS sequence number (in the above example "5") in the header part 201' of the request message 201, especially a HTTP request, (that itself has the sequence number "4") - and while the core network node or entity 121 knows what the next expected message should be - the RAN does not need to process any NAS container information beyond the (always visible) sequence number.

The current SBI specification (TS 29.500) allows for mandatory (to support) custom headers. That is, 3GPP-defined HTTP headers that should be understood by network elements using the SBI protocol stack.
Since the AMF is aware of the NAS messages and NAS flow, it is possible for the AMF to indicate (in downlink messages as the request message 201), to the gNB, the next expected NAS packet (e.g. a NAS security mode complete NAS payload, which the gNB sees only as an "encrypted NAS MM message") by means of a reference to the information the gNB can see, that is, the NAS sequence number. Thus:
-- The information what (encrypted) NAS message RAN should include in the HTTP response is provided by the AMF (the AMF can see the unencrypted flows);
-- The information the gNB needs to identify the message to be included in the reply does not require decrypting the NAS payload and is already available in the current NAS specification.
On the other hand, for responses coming from the CN (that is, response messages 202 from the CN in downlink and corresponding to a RAN-CN request, i.e. the request message 201 is in uplink direction), it is proposed, according to an embodiment the present invention, that the gNB is unconstraint and leaves the decision whether to include a message payload in the response up to the AMF, i.e.
-- The AMF may decide to send an empty response;
-- The AMF may decide to send a NAS message in the response, which the gNB can then process/forward without needing to know about the NAS flow.
Hence, it is possible for the AMF to flexibly adapt the mapping based on the expected information from the gNB.

These mapping considerations are exemplarily shown in Figures 3 to 7. Regarding the following description of each of these Figures, the indication "in the n^{th} processing step, 'abc' or 'abc-message' is transmitted by x-entity/received by y-entity" means that the corresponding message (of type "abc") is transmitted by the respective sending (or transmitting) entity (from which the corresponding arrow is originating) to the respective receiving entity (towards which this arrow leads). Furthermore, NAS (layer) messages are indicated in grey and as dotted arrows; these NAS (layer) messages are actually transported by the subsequent transport protocol messages represented by means of drawn-through arrows with additional response messages being represented by dashed arrows having long dashes:

Figure 3 exemplarily represents a communication diagram between the user equipment 20, the access network node or entity (base station entity) 111, and the core network node or entity (especially an instance of the access and mobility management function or of the security anchor function) 121 regarding a user equipment registration. In a first processing step 301, a RRC Setup Request is transmitted by the user equipment 20 and in a second processing step 302, a RRC Setup Request (transmitted by the access network node or entity 111) is received by the user equipment 20;
in a third processing step 303, a NAS Initial Registration Request needs to be transmitted by the user equipment 20, which is realized by a fourth, a fifth and a sixth processing step;
in the fourth processing step 304, a RRC Setup Complete message is transmitted by the user equipment 20;
in the fifth processing step 305, an NGAP Initial UE Message is transmitted by the access network node or entity 111;
in the sixth processing step 306 (represented by a dashed arrow, long dashes), a response message regarding the NGAP Initial UE Message is transmitted by the core network node or entity 121, which response message corresponds to an additional message due to the use of the underlying request-response protocol used;
in a seventh processing step 307, a NAS Authentication Request needs to be transmitted by the core network node or entity 121, which is realized (regarding the N2 interface) by an eighth processing step;
in the eighth processing step 308, an NGAP DL NAS Transport message is transmitted by the core network node or entity 121;
in a ninth processing step 309, a NAS Authentication Response needs to be transmitted by the user equipment 20, which is realized by a tenth and an eleventh processing steps; in the tenth processing step 310, a RRC UL (Uplink) Info transfer message is transmitted by the user equipment 20;
in the eleventh processing step 311, an NGAP UL NAS Transport message is transmitted by the access network node or entity 111 which corresponds to the response message 202 corresponding to the request message 201 of the eighth processing step, which correspondence is indicated, in Figure 3, by a dashed arrow having shorter dashes between the eighth and eleventh processing steps;
in a twelfth processing step 312, a NAS Security Mode Command message needs to be transmitted by the core network node or entity 121, which is realized (regarding the N2 interface) by a thirteenth processing step;
in the thirteenth processing step 313, an NGAP DL NAS Transport message is transmitted by the core network node or entity 121;
in a fourteenth processing step 314, a NAS Security Mode Complete, NAS Registration Request needs to be transmitted by the user equipment 20, which is realized by a fifteenth and a sixteenth processing step;
in the fifteenth processing step 315, a RRC UL Info transfer message is transmitted by the user equipment 20;
in the sixteenth processing step 316, an NGAP UL NAS Transport message is transmitted by the access network node or entity 111 which corresponds to the response message 202 corresponding to the request message 201 of the thirteenth processing step, which correspondence is indicated, in Figure 3, by a dashed arrow having shorter dashes between the thirteenth and sixteenth processing steps;
in a seventeenth processing step 317, a NAS Registration Accept message needs to be transmitted by the core network node or entity 121, which is realized (regarding the N2 interface) by an eighteenth processing step;
in the eighteenth processing step 318, an NGAP Initial Context Setup Request is transmitted by the core network node or entity 121;
in a nineteenth processing step 319, a NGAP Initial Context Setup Response is transmitted by the access network node or entity 111 which corresponds to the response message 202 corresponding to the request message 201 of the eighteenth processing step, which correspondence is indicated, in Figure 3, by a dashed arrow having shorter dashes between the thirteenth and sixteenth processing steps;
in a twentieth processing step 320, a NAS Registration Complete message needs to be transmitted by the user equipment 20, which is realized by a twenty-first, a twenty-second and a twenty-third processing step;
in the twenty-first processing step 321, a RRC UL information transfer message is transmitted by the user equipment 20;
in the twenty-second processing step 322, an NGAP UL NAS Transport message is transmitted by the access network node or entity 111;
in the twenty-third processing step 323 (represented by a dashed arrow), a response message regarding the NGAP UL NAS Transport message is transmitted by the core network node or entity 121, which response message corresponds to an additional message due to the use of the underlying request-response protocol used.

Figure 4 exemplarily represents a communication diagram between the user equipment 20, the access network node or entity (base station entity) 111, the core network node or entity (especially an instance of the access and mobility management function or of the security anchor function) 121, and a further core network node or entity (especially an instance of a session management function) 121' regarding a user equipment-initiated service request (in case the user equipment is idle).
In a first processing step 401, a RRC Setup Request is transmitted by the user equipment 20 and in a second processing step 402, a RRC Setup Request (transmitted by the access network node or entity 111) is received by the user equipment 20;
in a third processing step 403, a Initial NAS Message (Service Request) needs to be transmitted by the user equipment 20, which is realized by a fourth, a fifth and a sixth processing step;
in the fourth processing step 404, a RRC Setup Complete (S-TMSI) message is transmitted by the user equipment 20;
in the fifth processing step 405, an NGAP Initial UE Message is transmitted by the access network node or entity 111;
in the sixth processing step 406 (represented by a dashed arrow, long dashes), a response message regarding the NGAP Initial UE Message is transmitted by the core network node or entity 121, which response message corresponds to an additional message due to the use of the underlying request-response protocol used;
in a seventh processing step 407, a Nsmf Update Ctxt Request is transmitted by the core network node or entity 121 (to the further core network node or entity 121');
in an eighth processing step 408, a Nsmf Update Ctxt Response is transmitted by the further core network node or entity 121' (to the core network node or entity 121);
in a ninth processing step 409, a NAS Service Request Accept message needs to be transmitted by the core network node or entity 121, which is realized (regarding the N2 interface) by a tenth and a fifteenth processing step;
in the tenth processing step 410, an NGAP initial Context Setup Request is transmitted by the core network node or entity 121;
in an eleventh processing step 411, a RRC Security Mode Command message is transmitted by the access network node or entity 111;
in a twelfth processing step 412, a RRC Security Mode Complete message is transmitted by the user equipment 20;
in a thirteenth processing step 413, a RRC Reconfiguration Request message is transmitted by the access network node or entity 111;
in a fourteenth processing step 414, a RRC Reconfiguration Response message is transmitted by the user equipment 20;
in the fifteenth processing step 415, a NGAP initial Context Setup Response message is transmitted by the access network node or entity 111 which corresponds to the response message 202 corresponding to the request message 201 of the tenth processing step, which correspondence is indicated, in Figure 4, by a dashed arrow having shorter dashes between the tenth and fifteenth processing steps;
in a sixteenth processing step 416, a Nsmf Update Ctxt Request is transmitted by the core network node or entity 121 (to the further core network node or entity 121');
in an seventeenth processing step 417, a Nsmf Update Ctxt Response is transmitted by the further core network node or entity 121' (to the core network node or entity 121).

Figure 5 exemplarily represents a communication diagram between the user equipment 20, the access network node or entity (base station entity) 111, the core network node or entity (especially an instance of the access and mobility management function or of the security anchor function) 121, and a further core network node or entity (especially an instance of a session management function) 121' regarding a user equipment-initiated service request (in case the user equipment is connected).
In a first processing step 501, a Initial NAS Message (Service Request) needs to be transmitted by the user equipment 20, which is realized by a second, a third and a fourth processing step;
in the second processing step 502, a RRC UL Info transfer message is transmitted by the user equipment 20;
in the third processing step 503, an NGAP UL NAS Transport message is transmitted by the access network node or entity 111;
in the fourth processing step 504 (represented by a dashed arrow, long dashes), a response message regarding the NGAP UL NAS Transport message is transmitted by the core network node or entity 121, which response message corresponds to an additional message due to the use of the underlying request-response protocol used;
in a fifth processing step 505, a Nsmf Update Ctxt Request is transmitted by the core network node or entity 121 (to the further core network node or entity 121');
in a sixth processing step 506, a Nsmf Update Ctxt Response is transmitted by the further core network node or entity 121' (to the core network node or entity 121);
in a seventh processing step 507, a NAS Service Request Accept message needs to be transmitted by the core network node or entity 121, which is realized (regarding the N2 interface) by an eighth and an eleventh processing step;
in the eighth processing step 508, an NGAP protocol data unit Session Resource Request is transmitted by the core network node or entity 121;
in a ninth processing step 509, a RRC Reconfiguration Request is transmitted by the access network node or entity 111;
in a tenth processing step 510, a RRC Reconfiguration Response is transmitted by the user equipment 20;
in the eleventh processing step 511, a NGAP initial Context Setup Response message is transmitted by the access network node or entity 111 which corresponds to the response message 202 corresponding to the request message 201 of the eighth processing step, which correspondence is indicated, in Figure 5, by a dashed arrow having shorter dashes between the eighth and eleventh processing steps;
in a twelfth processing step 512, a Nsmf Update Ctxt Request is transmitted by the core network node or entity 121 (to the further core network node or entity 121');
in a thirteenth processing step 513, a Nsmf Update Ctxt Response is transmitted by the further core network node or entity 121' (to the core network node or entity 121).

Figure 6 exemplarily represents a communication diagram between the user equipment 20, the access network node or entity (base station entity) 111, the core network node or entity (especially an instance of the access and mobility management function or of the security anchor function) 121, and a further core network node or entity (especially an instance of a session management function) 121' regarding a network-initiated service request (in case the user equipment is idle).
In a first processing step 601, a Namf N1N2 Request is transmitted by the further core network node or entity 121' (to the core network node or entity 121);
in a second processing step 602, a Namf N1N2 Response is transmitted by the core network node or entity 121 (to the further core network node or entity 121');
in a third processing step 603, an NGAP Paging message is transmitted by the core network node or entity 121;
in a fourth processing step 604 (represented by a dashed arrow, long dashes), a response message regarding the NGAP Paging message is transmitted by the access network node or entity 111, which response message corresponds to an additional message due to the use of the underlying request-response protocol used;
in a fifth processing step 605, a RRC Paging message (transmitted by the access network node or entity 111) is received by the user equipment 20;
in a sixth processing step 606, a RRC Setup Request is transmitted by the user equipment 20 and in a seventh processing step 607, a RRC Setup Request (transmitted by the access network node or entity 111) is received by the user equipment 20;
in an eighth processing step 608, a Initial NAS Message (Service Request) needs to be transmitted by the user equipment 20, which is realized by a ninth, a tenth and an eleventh processing step;
in the ninth processing step 609, a RRC Setup Complete message is transmitted by the user equipment 20;
in the tenth processing step 610, an NGAP Initial UE Message is transmitted by the access network node or entity 111;
in the eleventh processing step 611 (represented by a dashed arrow, long dashes), a response message regarding the NGAP Initial UE Message is transmitted by the core network node or entity 121, which response message corresponds to an additional message due to the use of the underlying request-response protocol used;
in a twelfth processing step 612, a Nsmf Update Ctxt Request is transmitted by the core network node or entity 121 (to the further core network node or entity 121');
in a thirteenth processing step 613, a Nsmf Update Ctxt Response is transmitted by the further core network node or entity 121' (to the core network node or entity 121);
in a fourteenth processing step 614, a NAS Service Request Accept message needs to be transmitted by the core network node or entity 121, which is realized (regarding the N2 interface) by a fifteenth and a twentieth processing step;
in the fifteenth processing step 615, an NGAP initial Context Setup Request is transmitted by the core network node or entity 121;
in a sixteenth processing step 616, a RRC Security Mode Command message is transmitted by the access network node or entity 111 (to the user equipment 20);
in a seventeenth processing step 617, a RRC Security Mode Complete message is transmitted by the user equipment 20 (to the access network node or entity 111);
in an eighteenth processing step 618, a RRC Reconfiguration Request message is transmitted by the access network node or entity 111 (to the user equipment 20);
in a nineteenth processing step 619, a RRC Reconfiguration Response message is transmitted by the user equipment 20 (to the access network node or entity 111);
in the twentieth processing step 620, a NGAP initial Context Setup Response message is transmitted by the access network node or entity 111 which corresponds to the response message 202 corresponding to the request message 201 of the fifteenth processing step, which correspondence is indicated, in Figure 6, by a dashed arrow having shorter dashes between the fifteenth and twentieth processing steps;
in a twenty-first processing step 621, a Nsmf Update Ctxt Request is transmitted by the core network node or entity 121 (to the further core network node or entity 121');
in a twenty-second processing step 622, a Nsmf Update Ctxt Response is transmitted by the further core network node or entity 121' (to the core network node or entity 121).
in a twenty-third processing step 423, a NAS UE Configuration Update Command (S-TMSI*) message needs to be transmitted by the core network node or entity 121, which is realized (regarding the N2 interface) by a twenty-fourth step;
in the twenty-fourth processing step 424, an NGAP DL NAS Transport message is transmitted by the core network node or entity 121;
in a twenty-fifth processing step 425, a NAS UE Configuration Update Complete message needs to be transmitted by the user equipment 20, which is realized by a twenty-sixth processing step and (regarding the N2 interface) by a twenty-seventh processing step;
in the twenty-sixth processing step 426, a RRC UL Info transfer message is transmitted by the user equipment 20;
in the twenty-seventh processing step 427, an NGAP UL NAS Transport message is transmitted by the access network node or entity 111 which corresponds to the response message 202 corresponding to the request message 201 of the twenty-fourth processing step, which correspondence is indicated, in Figure 6, by a dashed arrow having shorter dashes between the twenty-fourth and twenty-seventh processing steps.

The twenty-third to twenty-seventh processing steps especially refer to an Mobility Management NF Trigger UE Configuration Update to update the S-TMSI. That is, a core-network triggered message to update the S-TMSI the UE uses as temporary identifier.

It is common to all these communication diagrams, exemplary provided in Figures 3 to 6 that by creating a link between a NAS request (as the request message 201) and the expected NAS response (as the response message 202) - cf. Figure 2 - in a way that the gNB (or base station entity or access network node or entity 111) requires only a minimum of knowledge, it is possible to implement an SBI-based N2 interface in an efficient way, as well as without introducing any changes to the NAS protocol.

Furthermore, it is advantageously possible according to the present invention to provide for backwards-compatibility: The proposed solution does not have NAS impact. That is, the NAS protocol can be left as-is. However, another side of backwards-compatibility is supporting a gNB that does not understand the additional information. That's why, In Figure 7, a communication diagram, or flow, is shown where the gNB (or base station entity or access network node or entity 111) does not understand the header included by the AMF (or core network node or entity 121) and just returns an empty response (e.g. HTTP 204 OK without a body).

Hence, Figure 7 exemplarily represents a communication diagram between the user equipment 20, the access network node or entity (base station entity) 111, and the core network node or entity (especially access and mobility management function) 121 regarding a user equipment registration with backwards compatibility.
In a first processing step 701, a RRC Setup Request is transmitted by the user equipment 20 and in a second processing step 702, a RRC Setup Request (transmitted by the access network node or entity 111) is received by the user equipment 20;
in a third processing step 703, a NAS Initial Registration Request needs to be transmitted by the user equipment 20, which is realized by a fourth, a fifth and a sixth processing step;
in the fourth processing step 704, a RRC Setup Complete message is transmitted by the user equipment 20;
in the fifth processing step 705, an NGAP Initial UE Message is transmitted by the access network node or entity 111;
in the sixth processing step 706 (represented by a dashed arrow, long dashes), a response message regarding the NGAP Initial UE Message is transmitted by the core network node or entity 121, which response message corresponds to an additional message due to the use of the underlying request-response protocol used;
in a seventh processing step 707, a NAS Authentication Request needs to be transmitted by the core network node or entity 121, which is realized (regarding the N2 interface) by an eighth processing step and a ninth processing step;
in the eighth processing step 708, an NGAP DL NAS Transport message is transmitted by the core network node or entity 121;
in the ninth processing step 709 (represented by a dashed arrow, long dashes), a response message regarding the NGAP DL NAS Transport message is transmitted by the access network node or entity 111, which response message corresponds to an additional message due to the use of the underlying request-response protocol used;
in a tenth processing step 710, a NAS Authentication Response needs to be transmitted by the user equipment 20, which is realized by an eleventh, a twelfth and a thirteenth processing steps;
in the eleventh processing step 711, a RRC UL Info transfer message is transmitted by the user equipment 20;
in the twelfth processing step 712, an NGAP UL NAS Transport message is transmitted by the access network node or entity 111;
in the thirteenth processing step 713 (represented by a dashed arrow, long dashes), a response message regarding the NGAP UL NAS Transport message is transmitted by the core network node or entity 121, which response message corresponds to an additional message due to the use of the underlying request-response protocol used;
in a fourteenth processing step 714, a NAS Security Mode Command message needs to be transmitted by the core network node or entity 121, which is realized (regarding the N2 interface) by a fifteenth processing step;
in the fifteenth processing step 715, an NGAP DL NAS Transport message is transmitted by the core network node or entity 121;
in a sixteenth processing step 716, a NAS Security Mode Complete, NAS Registration Request needs to be transmitted by the user equipment 20, which is realized by a seventeenth, an eighteenth and a nineteenth processing step;
in the seventeenth processing step 717, a RRC UL Info transfer message is transmitted by the user equipment 20;
in the eighteenth processing step 718, an NGAP UL NAS Transport message is transmitted by the access network node or entity 111;
in the nineteenth processing step 719 (represented by a dashed arrow, long dashes), a response message regarding the NGAP UL NAS Transport message is transmitted by the core network node or entity 121, which response message corresponds to an additional message due to the use of the underlying request-response protocol used;
in a twentieth processing step 720, a NAS Registration Accept message needs to be transmitted by the core network node or entity 121, which is realized (regarding the N2 interface) by an twenty-first processing step;
in the twenty-first processing step 721, an NGAP Initial Context Setup Request is transmitted by the core network node or entity 121;
in a twenty-second processing step 722, a NGAP Initial Context Setup Response is transmitted by the access network node or entity 111 which corresponds to the response message 202 corresponding to the request message 201 of the twenty-first processing step, which correspondence is indicated, in Figure 7, by a dashed arrow having shorter dashes between the twenty-first and twenty-second processing steps;
in a twenty-third processing step 723, a NAS Registration Complete message needs to be transmitted by the user equipment 20, which is realized by a twenty-fourth, a twenty-fifth and a twenty-sixth processing step;
in the twenty-fourth processing step 724, a RRC UL information transfer message is transmitted by the user equipment 20;
in the twenty-fifth processing step 725, an NGAP UL NAS Transport message is transmitted by the access network node or entity 111;
in the twenty-sixth processing step 726 (represented by a dashed arrow, long dashes), a response message regarding the NGAP DL NAS Transport message is transmitted by the core network node or entity 121, which response message corresponds to an additional message due to the use of the underlying request-response protocol used.

In the communication flow shown in Figure 7, the AMF (or core network node or entity 121) gets the NAS Authentication Response in a separate message (HTTP request) instead of the requested HTTP response. The AMF can in this case:
-- mark the HTTP request/response with the NAS authentication Request as completed;
-- adapt the NAS state machine such that it indicates that the NAS message expected in the HTTP response will arrive in a separate HTTP request;
-- for subsequent messages, the flow can be further adapted e.g.,
   -- when receiving the NAS authentication response, send the NAS Security Mode Command in the HTTP response;
   -- empty answer to NAS Security Mode Complete (received over NGAP Uplink NAS Transport)

According to the present invention, it is furthermore possible and preferred that the adaptation of the exchange of NGAP messages and/or NAS messages to an underlying request-response protocol is rendered even more flexible, however at the expense of requiring (minimal) NAS protocol enhancements:
Instead of using the NAS sequence number (as the reference identifier information), a new identifier (NAS reply code message) is introduced (e.g. a randomly generated sequence), which is included in the non-encrypted part of the NAS payload, and allows the gNB (or base station entity or access network node or entity 111) to map the request and response NAS payloads, such that the correct NAS (response) payload is able to be included in the HTTP response.
For the exemplary case of the HTTP protocol being used as the underlying request-response (transport) protocol, the HTTP request message 201 (cf. Figure 2) might again be a "HTTP POST (NGAP DownlinkNASTransport)" message, and the HTTP response message 202 might be a "HTTP 200 OK (UplinkNASTransport)" message.
The core network (node or entity 121) is allowed to indicate the expected NAS reply code message in HTTP request's header: The core network knows what the next expected message should be; the radio access network (or base station entity or access network node or entity 111) does not need to process any NAS container information beyond the (always visible)reply code. The NAS reply code has to reach the user equipment 20; it is, thus, preferred that the NAS reply-code is also sent in the (encrypted) NAS payload to avoid an impact to the radio resource control layer.
The header part 201' ("HTTP header") of the request message 201 might comprise the following pieces of information:
   scheme: https; method: POST; path: <URI>; content-type: multipart/related; 3gpp-nas-reply-code: 0xeb75c70f (as an example),
   and the body part 201" ("HTTP Body") of the request message 201 might comprise the following pieces of information:
      NGAP binary payload (ADN.1-coded): DownlinkNASTransport (EPD: 5G mobility management messages; Security header: Integrity protected; Auth. Code: 0x21fd796c; sequence number: 4); <NAS payload>;
      whereas the header part 202' ("HTTP header") of the request message 202 might comprise the following pieces of information:
         status: 200 OK,
         and the body part 202" ("HTTP Body") of the request message 202 might comprise the following pieces of information:
            NGAP binary payload (ADN.1-coded): UplinkNASTransport (EPD: 5G mobility management messages; Security header: Ciphered; Auth. Code: 0xa0341022; sequence number: 5); NAS reply code: 0xeb75c70f <NAS payload>.
            As the NAS reply code information (as the reference identifier information, referencing, or indicating, the second message of the considered pair of messages) is visible to the RAN, i.e. to the access network node or entity 111, the information "NAS reply code: 0xeb75c70f" the access network node or entity 111 is able to include the respective NAS payload in its response message 202, and, thus, avoid an increase in the number of messages.
            Thus, at the expense of requiring a new Information Element (IE) in the NAS protocol, this approach allows the UE to introduce additional (e.g. optional) NAS messages (which would inevitably increase the sequence counter) without "breaking" the request/response mapping.

Furthermore, according to other embodiments of the present invention, an expiration of mappings is provided: As failures might occur - e.g. procedures may get broken (e.g. if the user equipment unexpectedly shuts down), instances can crash and errors happen -, a robust implementation is probably not able to be achieved if the mappings (between a request message 201 and its corresponding response message 202) would never expire.
In order to avoid mappings to get into a undefined state, which may result in memory leaks (i.e. a type of resource leak that occurs when a computer program incorrectly manages memory allocations) in the gNB or base station entity 111, it is proposed, according to other embodiments of the present invention, to use time-related information regarding the expiration of a given mapping:
-- expiration time / timestamp of a mapping included in the request (an expiration time is preferred because it could be very efficiently compressed because of being a repeated header);
-- configuration of a timer on the gNB (or AMF).

Since the NAS reply code has to be included by the user equipment 20 in the NAS response, the NAS reply code has to reach the user equipment 20. According to the present invention, it is proposed that this information is included not only in the N2 header information but also in the (encrypted) NAS payload. In this way:
-- this information (i.e. the NAS reply code) cannot be interfered and/or tampered with, and
-- no changes to the RRC layer are needed.
Since this information is not relevant for the RRC layer, there is no need to require changes to that protocol layer.
Alternatively, in order to save some transmission bandwidth between the radio access network and the core network, it could be considered that the information included in the N2 header is forwarded via the RRC layer to the user equipment 20; however, this variant is not preferred.
In Figure 8, a communication diagram is represented, schematically showing how the NAS reply code reaches the user equipment 20:
In a first processing step 801, an N2 message - comprising the (request) NAS message as well as the NAS reply information (or NAS reply code, i.e. the reference identifier information) - is transmitted, by the core network node or entity 121, to the access network node or entity 111.
In a second processing step 802, the NAS reply information is stored.
In a third processing step 803, the access network node or entity 111 transmits a radio resource control (RRC) message - comprising the (request) NAS message as well as the NAS reply information or NAS reply code - to the user equipment 20.
In a fourth processing step 804, the NAS reply information or NAS reply code is stored by the user equipment 20.
In a fifth processing step 805, the (response) NAS message being associated to the NAS reply information or NAS reply code is generated by the user equipment 20.
In a sixth processing step 806, the user equipment 20 transmits a radio resource control (RRC) message - comprising the (response) NAS message as well as the NAS reply information or NAS reply code - to the access network node or entity 111.
In a seventh processing step 807, the access network node or entity 111 associates the (response) NAS message with the N2 reply.
In an eighth processing step 808, the access network node or entity 111 transmits the N2 reply message (comprising the (response) NAS message) to the core network node or entity 121.

Furthermore, according to other embodiments of the present invention, the current NAS layer may be split into a (NAS sub-)layer containing the new NAS reply information and a (NAS sub-)layer containing the current NAS information elements, such that the NAS information elements and the NAS reply information are sent together or associated with each other. Hence, the NAS reply information not being included within the NAS message itself but rather the NAS message being associated to a NAS reply information.

## Claims

1. Method for using a user equipment (20) with a mobile communication network (100) and/or for transmitting next generation application layer protocol messages, NGAP messages, and/or non-access stratum messages, NAS messages, wherein the mobile communication network (100) comprises at least one access network node or entity (111) of an access network (110) and at least one core network node or entity (121) of a core network (120),
wherein the access network node or entity (111) and the core network node or entity (121) exchange NGAP messages in uplink and downlink direction over an underlying protocol being a request-response protocol, and/or wherein the user equipment (20) and the core network node or entity (121) exchange - especially involving the access network node or entity (111) - NAS messages in uplink and downlink direction over an underlying protocol being a request-response protocol, wherein, in order to provide communication services to the user equipment (20) and/or for using the user equipment (20) with the mobile communication network (100), the method comprises - regarding a considered pair of messages comprising one uplink and one downlink message, the considered pair of messages being a pair of NGAP messages or a pair of NAS messages - the step of transporting the considered pair of messages by means of:
-- a request message, and
-- a response message
of the underlying protocol.

2. Method according to claim 1, wherein the considered pair of messages - especially a pair of NGAP messages of the class 2 NGAP message type that lacks a defined reply message - comprises, according to their chronological order or occurrence, a first message and a second message, wherein
-- the first message of the considered pair of messages is transported by, or corresponding to, at least partly, the request message of the underlying protocol, and
-- the second message of the considered pair of messages is transported by, or corresponding to, at least partly, the response message of the underlying protocol, which response message corresponds to the request message, wherein especially the second message of the considered pair of messages corresponds to the payload, or part thereof, of the response message.

3. Method according to one of the preceding claims, wherein - regarding the pair of messages, especially a pair of NGAP messages of the class 2 NGAP message type that lacks a defined reply message, comprising the uplink and the downlink message and regarding the corresponding request and response messages of the underlying protocol - the request message comprises, or is associated to, in a manner accessible to the access network node or entity (111), a reference identifier information referencing, or indicating, the second message of the considered pair of messages,
wherein especially the first message of the considered pair of messages is a downlink message.

4. Method according to one of the preceding claims, wherein the reference identifier information corresponds to, or at least comprises, the non-access stratum, NAS, sequence number and/or a non-access stratum, NAS, reply code.

5. Method according to one of the preceding claims, wherein at least downlink NGAP messages and/or downlink NAS messages, but especially both uplink and downlink NGAP messages and/or both uplink and downlink NAS messages, are encrypted in a manner such that access to their content or at least part thereof is denied to the network node or entity (111),
wherein especially, in case that NAS messages comprise, or are associated to, the reference identifier information, the reference identifier information is part of the encrypted part of the NAS message as well as part of the part of the NAS message that is accessible to the access network node or entity (111).

6. Method according to one of the preceding claims, wherein the underlying request-response protocol is, or corresponds to, the hypertext transfer protocol, HTTP protocol, especially according to the HTTP/2 standard, especially as defined in RFC 7540 and/or RFC 7541, and/or according to the HTTP/3 standard, especially as defined in RFC 9114.

7. Method according to one of the preceding claims, wherein - regarding the pair of messages and regarding the corresponding request and response messages of the underlying protocol - the response message of the underlying protocol corresponds to a HTTP "2XX" message, comprising the second message of the considered pair of messages as part of its HTTP body.

8. Method according to one of the preceding claims, wherein - regarding the pair of messages and regarding the corresponding request and response messages of the underlying protocol - the request message and/or the response message of the underlying protocol comprises, or is associated to, a time-related information, especially as part of its header portion,
wherein especially the time-related information comprises or indicates a timestamp and/or an expiration time.

9. System or mobile communication network (100) for using a user equipment (20) with the mobile communication network (100) and/or for transmitting next generation application layer protocol messages, NGAP messages, and/or non-access stratum messages, NAS messages,
wherein the system or mobile communication network (100) comprises at least one access network node or entity (111) of an access network (110) and at least one core network node or entity (121) of a core network (120),
wherein the access network node or entity (111) and the core network node or entity (121) exchange NGAP messages in uplink and downlink direction over a underlying protocol being a request-response protocol, and/or wherein the user equipment (20) and the core network node or entity (121) exchange - especially involving the access network node or entity (111) - NAS messages in uplink and downlink direction over an underlying protocol being a request-response protocol, wherein, in order to provide communication services to the user equipment (20) and/or for using the user equipment (20) with the mobile communication network (100), the system or the mobile communication network (100) is configured such that - regarding a considered pair of messages comprising one uplink and one downlink message, the considered pair of messages being a pair of NGAP messages or a pair of NAS messages - transporting the considered pair of messages is realized by means of:
-- a request message, and
-- a response message
of the underlying protocol,
especially such that the considered pair of messages - especially a pair of NGAP messages of the class 2 NGAP message type that lacks a defined reply message - comprises, according to their chronological order or occurrence, a first message and a second message, wherein
-- the first message of the considered pair of messages is transported by, or corresponding to, at least partly, the request message of the underlying protocol, and
-- the second message of the considered pair of messages is transported by, or corresponding to, at least partly, the response message of the underlying protocol message that corresponds to the request message, wherein especially the second message of the considered pair of messages corresponds to the payload, or part thereof, of the response message.

10. User equipment (20) for being used with a mobile communication network (100), especially according to claim 9, and/or for transmitting and/or receiving at least one non-access stratum message, NAS message, that comprises a reference identifier information, especially as a non-access stratum reply code, and wherein the user equipment (20) is especially configured such as to
-- transmit the at least one NAS message to a core network node or entity (121) of the mobile communication network (100) and/or
-- receive the at least one NAS message from a core network node or entity (121) of the mobile communication network (100),
wherein especially the user equipment (20) is configured - in view of NGAP messages being transmitted, in uplink and downlink direction and between an access network node or entity (111) and the core network node or entity (121) over an underlying protocol being a request-response protocol - such that, regarding a considered pair of NAS messages comprising one uplink and one downlink message and being transported by means of a request message, and a response message of the underlying protocol, the user equipment (20) receives and/or transmits the reference identifier information, wherein especially the reference identifier information references, or indicates, at least one of the messages of the considered pair of NAS messages.

11. User equipment (20) according to claim 10, wherein the user equipment (20) and the core network node or entity (121) exchange - especially involving the access network node or entity (111) - NAS messages in uplink and downlink direction over the underlying protocol,
wherein, in order to provide communication services to the user equipment (20) and/or for using the user equipment (20) with the mobile communication network (100), the user equipment (20) is configured such that - regarding a considered pair of NAS messages comprising one uplink and one downlink NAS message - transporting the considered pair of NAS messages is realized by means of:
-- a request message, and
-- a response message
of the underlying protocol.

12. Program comprising a computer readable program code, which, when executed on a computer and/or on a core network node or entity (121) and/or on an access network node or entity (111), especially a base station entity (111), or in part on a core network node or entity (121) and/or in part on an access network node or entity (111), especially a base station entity (111), causes the computer and/or the core network node or entity (121) and/or the access network node or entity (111), especially the base station entity (111), to perform a method according to one of claims 1 to 8.

13. Computer-readable medium comprising instructions which when executed on a computer and/or on a core network node or entity (121) and/or on an access network node or entity (111), especially a base station entity (111), or in part on a core network node or entity (121) and/or in part on an access network node or entity (111), especially a base station entity (111), causes the computer and/or the core network node or entity (121) and/or the access network node or entity (111), especially the base station entity (111), to perform a method according to one of claims 1 to 8.
